(19) Europäisches Patentamt
European Patent Office
Office européen des brevets

(11) **EP 4 610 321 A1**

(12) **EUROPEAN PATENT APPLICATION**
published in accordance with Art. 153(4) EPC

(43) Date of publication:
03.09.2025 Bulletin 2025/36

(21) Application number: 23882490.8

(22) Date of filing: 17.10.2023

(51) International Patent Classification (IPC):
C09D 175/04 (2006.01)  C08K 3/04 (2006.01)
C08L 75/04 (2006.01)  C09D 5/02 (2006.01)
C09D 5/33 (2006.01)  C09D 7/61 (2018.01)

(52) Cooperative Patent Classification (CPC):
C08K 3/04; C08L 75/04; C09D 5/004; C09D 5/02;
C09D 7/61; C09D 175/04

(86) International application number:
PCT/JP2023/037474

(87) International publication number:
WO 2024/090285 (02.05.2024 Gazette 2024/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.10.2022 JP 2022173520

(71) Applicant: MITSUBISHI PENCIL COMPANY,
LIMITED
Tokyo 140-8537 (JP)

(72) Inventors:
• IKAI, Takayuki
  Tokyo 140-8537 (JP)
• KADOHASHI, Kouta
  Tokyo 140-8537 (JP)

(74) Representative: Vossius & Partner
Patentanwälte Rechtsanwälte mbB
Siebertstrasse 3
81675 München (DE)

(54) **WATER-BASED DISPERSION FOR ELECTROMAGNETIC WAVE SHIELDING FILM FORMATION**

(57)    The present invention provides a novel water-based dispersion for electromagnetic wave shielding film formation that has good coating and adhesion to a resin substrate and that can form an electromagnetic wave shielding film having good electrical characteristics. This water-based dispersion for electromagnetic wave shield film formation contains water, carbon black, and a urethane dispersion. The ratio of the mass of particles of the polyurethane dispersion to the mass of the carbon black is 0.55-1.20.

EP 4 610 321 A1

**Description**

FIELD

The present invention relates to a water-based(aqueous) dispersion for electromagnetic wave shielding film formation.

BACKGROUND

With the widespread use of electronic devices such as personal computers, mobile phones and tablet terminals, in recent years, the exchange of information is now possible not only at home or at work, but also wherever you are, indoor or outdoor, using these electronic devices. However, while these electronic devices are highly convenient, there are problems that unwanted electromagnetic waves (noise) emitted from the electronic devices cause adverse effects such as malfunctions of other electronic devices or electrical products, which are problematic. To solve such problems, various types of electromagnetic wave reducing sheets have been disclosed.

PTL 1 discloses a composition for electromagnetic wave shielding film formation, which is used for formation of a film having an electromagnetic wave shielding effect on a member that emits an electromagnetic wave and/or a member covering the same. This composition for electromagnetic wave shielding film formation is in the form of a liquid, is injected by an ink-jet method, and contains a powder made of an electromagnetic wave reducing material.

PTL 2 discloses an electromagnetic wave reducing sheet, wherein the sheet is composed of a resin composition (A) containing an electromagnetic wave reducing substance, and the resin composition (A) contains a polyurethane-based resin (a1) having a 100% modulus of from 1 to 7 MPa.

PTL 3 discloses a radio wave-absorbing coating material composition containing a coating film-forming resin and pitch-based carbon fibers, wherein the content of the pitch-based carbon fibers with respect to 100% by volume of the solid content of the composition is from 2 to 15% by volume.

PTL 4 discloses an electromagnetic wave-shielding coating material containing: a resin obtained by mixing a water-dispersible copolymer resin compound and a solvent-dissolvable copolymer resin compound; a nonionic surfactant; and an electrically conductive material.

PTL 5 discloses an electromagnetic wave-absorbing coating agent containing: water; a water based emulsion or a thickener; and magnetic substance-supported coil-like carbon fibers.

PTL 6 discloses an ink for ink-jet recording, in which composite particles including: a black pigment containing carbon particles having a hollow structure; and a resin; are dispersed. In this ink for ink-jet recording, the resin is an acrylic resin, and the acrylic resin has an acid value of 10 mg KOH/g or more and 150 mg KOH/g or less, and a neutralization ratio of less than 80%.

**[CITATION LIST]**

**[PATENT LITERATURE]**

[PTL 1] Japanese Unexamined Patent Publication No. 2013-168399 A
[PTL 2] Japanese Unexamined Patent Publication No. 2017-45782 A
[PTL 3] Japanese Unexamined Patent Publication No. 2020-111730 A
[PTL 4] Japanese Unexamined Patent Publication No. 2015-220233 A
[PTL 5] Japanese Unexamined Patent Publication No. 2015-172152 A
[PTL 6] Japanese Patent No. 5930176 B

SUMMARY

**[TECHNICAL PROBLEM]**

The present invention provides a novel water-based dispersion for electromagnetic wave shielding film formation, which dispersion is capable of forming an electromagnetic wave shielding film having good coating performance on and adhesion to a resin substrate, and good electrical properties.

**[SOLUTION TO PROBLEM]**

As a result of extensive studies, the present inventors have found out that the above-mentioned problems can be solved by the following means, thereby competing the present invention. Specifically, the present invention is as follows.

< Aspect 1 > A water-based dispersion for electromagnetic wave shielding film formation, the water-based dispersion comprising:

water;
carbon black; and
a urethane dispersion,
wherein the ratio of the mass of particles in the urethane dispersion to the mass of the carbon black is from 0.55 to 1.30.

< Aspect 2 > The water-based dispersion according to Aspect 1, wherein the ratio of the mass of the particles in the urethane dispersion to the mass of the carbon black is from 0.85 to 1.15.
< Aspect 3 > The water-based dispersion according to Aspect 1 or 2, wherein the particles in the urethane dispersion have an average particle diameter, as measured by the laser diffraction method, of 50 nm or less.
< Aspect 4 > The water-based dispersion according to any one of Aspects 1 to 3, wherein the water-based dispersion further comprises a volatile base, and wherein the content of the volatile base is from 0.1 to 3.0% by mass.
< Aspect 5 > The water-based dispersion according to any one of Aspects 1 to 4, wherein the water-based dispersion further comprises a gelling agent.
< Aspect 6 > The water-based dispersion according to Aspect 5, wherein the gelling agent is an alkali-swellable associative gelling agent.
< Aspect 7 > The water-based dispersion according to any one of Aspects 1 to 6, wherein the carbon black has a hollow shell-like structure, and has a BET specific surface area, as measured by the nitrogen adsorption method, of 1,000 m$^2$/ g or less.
< Aspect 8 > A method of producing an electromagnetic wave absorbing sheet, the method comprising coating the water-based dispersion according to any one of Aspects 1 to 7 on a resin substrate, and drying the coated dispersion to obtain an electromagnetic wave shielding film.
< Aspect 9 > The method according to Aspect 8, wherein the electromagnetic wave shielding film has a surface resistivity, as measured by the four-point probe method, of 400 Ω/□ **or** less.
< Aspect 10 > An electromagnetic wave absorbing sheet comprising:

a resin substrate; and
an electromagnetic wave shielding film provided on the resin substrate,
wherein the electromagnetic wave shielding film is an electromagnetic wave shielding film obtained by drying the water-based dispersion according to any one of Aspects 1 to 7.

< Aspect 11 > The electromagnetic wave absorbing sheet according to Aspect 10, wherein the electromagnetic wave shielding film has a dry film thickness of 100 μm or less, and a volume resistivity of 1.0 Ω·cm or less.

**[ADVANTAGEOUS EFFECTS OF INVENTION]**

The present invention can provide a novel water-based dispersion for electromagnetic wave shielding film formation, which dispersion is capable of forming an electromagnetic wave shielding film having good coating performance on and adhesion to a resin substrate, and good electrical properties.

BRIEF DESCRIPTION OF DRAWINGS

FIG. 1 is a graph showing the relationship between the ratio of the mass of a binder to the mass of carbon black, in the case of using a urethane dispersion as the binder, and the surface resistivity of the resulting electromagnetic wave shielding film.
FIG. 2 is a graph showing the relationship between the ratio of the mass of a binder to the mass of carbon black, in the case of using a styrene-acrylic resin or an acrylic resin as the binder, and the surface resistivity of the resulting electromagnetic wave shielding film.

## DESCRIPTION OF EMBODIMENTS

<< Water-based Dispersion for Electromagnetic Wave Shielding Film Formation>>

The water-based dispersion for electromagnetic wave shielding film formation according to the present invention contains:

water;
carbon black; and
a urethane dispersion,
wherein the ratio of the mass of particles in the urethane dispersion to the mass of the carbon black is from 0.55 to 1.30.

The present inventors have found out that the above-described constitution makes it possible to obtain an electromagnetic wave shielding film having good coating performance on a resin substrate, and good electrical properties.

The ratio of the mass of the particles in the urethane dispersion to the mass of the carbon black may be 0.55 or more, 0.60 or more, 0.65 or more, 0.70 or more, 0.80 or more or 0.85 or more, and at the same time, may be 1.30 or less, 1.20 or less, 1.15 or less, 1.10 or less, 1.05 or less or 1.00 or less. When the mass ratio is within such a range, the resulting electromagnetic wave shielding film has a low surface resistivity value, thereby achieving a good electromagnetic wave absorbing performance. While it is not desired to be bound by any theory, it is thought that such a good electromagnetic wave absorbing performance can be obtained, because such a ratio allows the carbon black to be moderately distributed without causing the particles to cover the surface of the carbon black and inhibiting the electrical conductivity.

The water-based dispersion for electromagnetic wave shielding film formation according to the present invention may contain an optional dispersant. In such a case, the mass ratio of the dispersant to the carbon black may be 0.17 or more, 0.18 or more or 0.19 or more, and at the same time, the mass ratio may be 0.40 or less, 0.35 or less, 0.30 or less, 0.28 or less, 0.25 or less or 0.23 or less.

The water-based dispersion for electromagnetic wave shielding film formation according to the present invention preferably contains a volatile base, from the viewpoint of reducing the repellence of the coated film.

The water-based dispersion for electromagnetic wave shielding film formation according to the present invention preferably further contains a gelling agent, from the viewpoint of obtaining an electromagnetic wave shielding film having a desired thickness, for example, an electromagnetic wave shielding film having a DRY film thickness of 5 $\mu$m or more, 7 $\mu$m or more, 10 $\mu$m or more, 15 $\mu$m or more, 17 $\mu$m or more, 20 $\mu$m or more, 25 $\mu$m or more or 30 $\mu$m or more.

The respective components of the present invention will be described below.

< Water >

Distilled water, ion exchanged water or the like can be used as the water.

< Carbon Black >

For example, Ketjen Black or the like can be used as the carbon black. The carbon black can have a hollow shell-like structure.

The BET specific surface area of the carbon black, as measured by the nitrogen adsorption method, may be 1,000 $m^2$/g or less, 900 $m^2$/g or less, 800 $m^2$/g or less, 700 $m^2$/g or less, 600 $m^2$/g or less, 500 $m^2$/g or less, 400 $m^2$/g or less or 300 $m^2$/g or less. The BET specific surface area described above may be 100 $m^2$/g or more or 200 $m^2$/g or more.

The content of the carbon black may be 5% by mass or more, 6% by mass or more or 7% by mass or more, and at the same time, may be 15% by mass or less, 12% by mass or less, 10% by mass or less or 8% by mass or less, with respect to the mass of the water-based dispersion for electromagnetic wave shielding film formation.

< Dispersant >

The dispersant that can be used may be, for example, a water-soluble resin such as polyvinylpyrrolidone, polyvinyl methyl ether, polyvinyl acetal, polyacrylic acid or a salt thereof, polyethylene oxide, a vinyl acetate-polyvinylpyrrolidone copolymer, a styrene-acrylic acid copolymer or a salt thereof, or an isobutylene maleic anhydride copolymer or a salt thereof.

The content of the dispersant can be selected, as appropriate, so as to satisfy the above-described ratio of the dispersant to the carbon black. The content of the dispersant may be, for example, 0.1% by mass or more, 0.3% by mass or more, 0.5% by mass or more, 0.7% by mass or more, 0.9% by mass or more, 1.0% by mass or more, 1.1% by mass or more, 1.3% by mass or more or 1.5% by mass or more, and at the same time, may be 6.0% by mass or less, 5.5% by mass or less, 5.0% by mass or less, 4.5% by mass or less, 4.0% by mass or less, 3.5% by mass or less, 3.0% by mass or less, 2.8% by mass or less or 2.5% by mass or less, with respect to the mass of the water-based dispersion for electromagnetic wave shielding film formation.

< Urethane Dispersion >

The urethane dispersion is a dispersion of particles that are used as the binder for the carbon black, and a urethane dispersion provided in the form of a water-based dispersion can be used.

The average particle diameter of the particles in the urethane dispersion, as measured by the laser diffraction method, may be 800 nm or less, 750 nm or less, 700 nm or less, 650 nm or less, 600 nm or less, 550 nm or less, 500 nm or less, 450 nm or less, 400 nm or less, 350 nm or less, 300 nm or less, 250 nm or less, 230 nm or less, 200 nm or less, 170 nm or less, 150 nm or less, 130 nm or less, 110 nm or less, 100 nm or less, 90 nm or less, 80 nm or less, 70 nm or less, 60 nm or less, 50 nm or less, or 40 nm or less. The average particle diameter used in the present specification is the value of median diameter (D50) based on volume, calculated by the laser diffraction method. The measurement by the laser diffraction method can be carried out, for example, using a particle size distribution measuring apparatus, MT3300 II (manufactured by MicrotracBEL Corporation).

The content of the particles in the urethane dispersion is preferably 3% by mass or more, 4% by mass or more or 5% by mass or more, with respect to the mass of the water-based dispersion for electromagnetic wave shielding film formation, from the viewpoint of reducing the repellence when the water-based dispersion for electromagnetic wave shielding film formation is coated on a resin substrate. The above-described content may be 15% by mass or less, 13% by mass or less or 11% by mass or less. When the content is within such a range, the resulting electromagnetic wave shielding film has a low surface resistivity value, thereby achieving a good electromagnetic wave absorbing performance.

< Volatile Base >

As the volatile base, it is possible to use a base which can be volatilized by a drying process, particularly, a base having a vapor pressure at 25°C of more than 1 mm Hg. Examples of such a volatile base that can be used include ammonia, urea, monoethanolamine, diethanolamine, triethanolamine and aminomethylpropanol. These volatile bases may be used singly, or as a mixture.

The content of the volatile base may be, 0.1% by mass or more, 0.3% by mass or more, 0.5% by mass or more, 0.7% by mass or more, 1.0% by mass or more, 1.1% by mass or more, 1.3% by mass or more, 1.5% by mass or more or 1.7% by mass or more, and at the same time, may be 3.0% by mass or less, 2.8% by mass or less, 2.5% by mass or less, 2.2% by mass or less or 2.0% by mass or less, with respect to the mass of the water-based dispersion for electromagnetic wave shielding film formation.

< Gelling Agent >

As the gelling agent, it is preferred to use, for example, an alkali-swellable gelling agent, particularly, an alkali-swellable associative gelling agent, from the viewpoint of maintaining the dispersed state of the carbon black in the water-based dispersion for electromagnetic wave shielding film formation, thereby improving the electromagnetic wave absorbing performance of the resulting electromagnetic wave shielding film.

The "alkali-swellable" gelling agent as used herein refers to an unneutralized acrylic polymer, mainly one which contains an acid group such as a carboxyl group in the three-dimensional structure of the polymer, and which swells once by being neutralized with an alkali, and eventually dissolves by further neutralization.

In the present invention, it is preferred to use an alkali-swellable associative gelling agent, among the alkali-swellable gelling agents described above. The "alkali-swellable associative" gelling agent as used herein refers to such a polymer in which, when the polymer is swollen, a hydrophobic portion of the molecule associates with a hydrophobic portion of another molecule to form a loose bond between the molecules, thereby providing thickening properties.

It is thought that the alkali-swellable associative gelling agent has two main thickening effects. The first thickening effect refers to the effect that the gelling agent dissolves only in the alkaline region in a mixed solution with water or a polar solvent, and a hydrophilic group such as a carboxyl group in the molecule is hydrated and swollen to cause steric hindrance in the solution, resulting in an increase in viscosity. The second thickening effect refers to the effect that a hydrophobic group and a hydrophilic group in the molecule are associatively adsorbed with a hydrophobic group and a hydrophilic group in a component in the water-based dispersion, for example, a pigment, a solvent or a surfactant, respectively and separately, to form a network-like assembly, resulting in an increase in viscosity.

It is possible to use a polymer containing a carboxyl group and a hydrophobic group, as the alkali-swellable associative gelling agent according to the present invention. Examples of the hydrophobic group include linear and cyclic hydrocarbon groups, aromatic hydrocarbon groups, alkyl halide groups, organosilicon groups ($-SiR_3$) and fluorinated

carbon groups ($-C_n F_{2n+1}$). Specific examples of the polymer include polyacrylic acid, polymethacrylic acid, polyacrylic acid copolymers and polymethacrylic acid copolymers.

The content of the gelling agent is preferably 0.03% by mass or more, 0.05% by mass or more, 0.07% by mass or more, 0.10% by mass or more or 0.12% by mass or more, with respect to the mass of the water-based dispersion for electromagnetic wave shielding film formation, from the viewpoint of obtaining an electromagnetic wave shielding film having a desired thickness. Further, the content of the gelling agent is preferably 0.25% by mass or less, 0.22% by mass or less, 0.20% by mass or less, 0.18% by mass or less or 0.15% by mass or less, with respect to the mass of the water-based dispersion, from the viewpoint of the coating suitability of the water-based dispersion for electromagnetic wave shielding film formation.

<< Method of Producing Electromagnetic Wave Absorbing Sheet >>

The method of producing an electromagnetic wave absorbing sheet according to the present invention includes coating the water-based dispersion described above on a resin substrate, and drying the coated dispersion to obtain an electromagnetic wave shielding film.

The thus obtained electromagnetic wave shielding film can have a surface resistivity, as measured by the four-point probe method, of 400 $\Omega/\square$ **or less, 380$\Omega/\square$ or less, 350$\Omega/\square$ or less,** or 320$\Omega/\square$ **or less.** The surface resistivity described above can be, for example, 100$\Omega/\square$ **or more,** 150$\Omega/\square$ **or more,** or 180$\Omega/\square$ **or more.** When the surface resistivity is within such a range, it is possible to obtain a good electromagnetic wave absorbing performance of the resulting electromagnetic wave shielding film. The probe interval in the four-point probe method is 10 mm.

The coating can be carried out using an applicator, a bar coater, an ink-jet printer, a comma coater, a gravure coater, a screen, or the like.

The resin substrate that can be used may be, for example, a polyolefin-based resin such as polypropylene, a polyester-based resin such as polyethylene terephthalate, a polyamide-based resin such as Nylon or aramid, polycarbonate, or the like.

<< Electromagnetic Wave Absorbing Sheet >>

The electromagnetic wave absorbing sheet according to the present invention includes: a resin substrate; and an electromagnetic wave shielding film provided on the resin substrate. The electromagnetic wave shielding film is an electromagnetic wave shielding film obtained by drying the water-based dispersion described above, particularly one obtained by the method described above.

The electromagnetic wave shielding film can have a DRY film thickness of 100 $\mu$m or less. The DRY film thickness described above can be 90 $\mu$m or less, 80 $\mu$m or less, 70 $\mu$m or less, 60 $\mu$m or less, 50 $\mu$m or less, 40 $\mu$m or less, 30 $\mu$m or less, 20 $\mu$m or less, 15 $\mu$m or less, 12 $\mu$m or less, 10 $\mu$m or less, 7 $\mu$m or less or 5 $\mu$m or less. The DRY film thickness can be measured using a stylus-type surface profile measuring device, for example, Dektak, manufactured by Bruker Corporation.

The electromagnetic wave shielding film can have a volume resistivity of 1.0 $\Omega\cdot$cm or less, 0.8 $\Omega\cdot$cm or less, 0.5 $\Omega\cdot$cm or less, 0.4 $\Omega\cdot$cm or less or 0.3 $\Omega\cdot$cm or less. The volume resistivity described above is measured in accordance with JIS C 2139: 2008, under the conditions of a surrounding temperature of 25°C and a relative humidity of 40% RH.

EXAMPLES

The present invention will be described specifically with reference to Examples and Comparative Examples. However, the present invention is in no way limited to these Examples.

<< Preparation of Water-based Dispersion for Electromagnetic Wave Shielding Film Formation>>

< Example 1 >

A quantity of 60 parts by mass of a carbon black toner, 15 parts by mass of a urethane dispersion, 1 part by mass of a surfactant, 1 part by mass of triethylamine (TEA) and 0.1 parts by mass of an antiseptic were mixed, to prepare the water-based dispersion for electromagnetic wave shielding film formation of Example 1.

The carbon black toner contains 7.8 parts by mass of carbon black (CB), 0.78 parts by mass of aminomethylpropanol (AMP), 1.56 parts by mass of a styrene-acrylic resin (SA), as a dispersant, and 49.86 parts by mass of water.

The urethane dispersion as used herein is a water-based urethane dispersion in which particles of urethane dispersion are dispersed in water.

< Examples 2 to 7 and Comparative Examples 1 to 24 >

The water-based dispersion for electromagnetic wave shielding film formation of each of Examples 2 to 7 and Comparative Examples 1 to 24 was prepared in the same manner as in Example 1, except that the substances to be used and the contents thereof are changed as shown in Tables 1 to 4.

Details of other substances shown in Tables 1 to 4 are as follows. In these Tables, the mass of the solid content is described, for each substance whose solid content is shown.

Urethane A: HYDRAN WLS201 (solid content: 35%, average particle diameter: 35 nm; manufactured by DIC Corporation)

Urethane B: HYDRAN WLS213 (solid content: 35%, average particle diameter: 27 nm; manufactured by DIC Corporation)

Urethane C: HYDRAN HW-920 (solid content: 50%, average particle diameter: 204 nm; manufactured by DIC Corporation)

Styrene-acrylic A: JONCRYL 52J (Tg: 56°C, dissolvable, solid content: 60%; manufactured by BASF Japan Ltd.)

Styrene-acrylic B: JONCRYL JDX6180 (Tg: 134°C, dissolvable, solid content: 27%; manufactured by BASF Japan Ltd.)

Acrylic A: JONCRYL PDX-7780 (Tg: 92°C, average particle diameter: 114 nm, solid content: 48%; manufactured by BASF Japan Ltd.)

Acrylic B: JONCRYL PDX-7734 (Tg: 40°C, average particle diameter: 73 nm, solid content: 41.4%; manufactured by BASF Japan Ltd.)

Acrylic C: JONCRYL PDX-7356 (Tg: 25°C, average particle diameter: 70 nm, solid content: 45.5%; manufactured by BASF Japan Ltd.)

Acrylic D: JONCRYL PDX-7357 (Tg: -4°C, average particle diameter: 99 nm, solid content: 49.5%; manufactured by BASF Japan Ltd.)

Acrylic E: JONCRYL PDX-7430 (Tg: 30°C, average particle diameter: 752 nm, self-crosslinkable, solid content: 38%; manufactured by BASF Japan Ltd.)

Acrylic F: JONCRYL 352D (Tg: 56°C, average particle diameter: 99 nm, solid content: 45%; manufactured by BASF Japan Ltd.)

Acrylic G: JONCRYL 89J (Tg: 98°C, average particle diameter: 114 nm, solid content: 48%; manufactured by BASF Japan Ltd.)

Acrylic H: ULTRASOL CMX-235 (Tg: -15°C, average particle diameter: 185 nm, solid content: 45%; manufactured by Aica Kogyo Co., Ltd.)

Acrylic I: ULTRASOL LTC-100 (average particle diameter: 216 nm; manufactured by Aica Kogyo Co., Ltd.)

Acrylic J: POLYSOL AP-3720N (Tg: 9°C, average particle diameter: 147 nm, solid content: 51%)

Surfactant: OLFINE 4200, manufactured by Nissin Chemical Co., Ltd.

Antiseptic: BIOCIDE 1700, manufactured by Taisho Technos Co., Ltd.

Dispersant SA: JONCRYL 63J (Tg: 73°C, dissolvable, solid content: 30%; manufactured by BASF Japan Ltd.)

<< Evaluation >>

Each water-based dispersion for electromagnetic wave shielding film formation prepared as described above was coated on the entire surface of a polyethylene terephthalate film having a size of 10 cm × 10 cm, using an applicator, with the value of the WET film thickness set to 50 μm. Subsequently, the coated water-based dispersion for electromagnetic wave shielding film formation was dried, to obtain an electromagnetic wave absorbing sheet having an electromagnetic wave shielding film.

< Repellence of Coated Film >

The repellence of the coated film of each electromagnetic wave shielding film prepared as described above was evaluated by visual observation of the external appearance.

A: A uniform and flat coated film was formed.

B: While slight irregularities were observed on the surface, a uniform coated film was formed.

C: The occurrence of repellence was observed on the surface of the polyethylene terephthalate film, to the extent that it can be detected by visual observation.

D: The occurrence of repellence was observed to the extent that more than half of the surface of the polyethylene terephthalate film was exposed.

< Adhesion >

The adhesion of each electromagnetic wave shielding film was evaluated by the cross-cut test method. Specifically, a plurality of cuts were made on each resulting electromagnetic wave shielding film, using a cutter, in a grid-like pattern at an interval of about 1 mm. Subsequently, a Cellophane Tape (registered trademark) was pasted on the film so as to cover the thus made cuts, the tape was peeled off at an angle of about 60 degrees, and the state of the electromagnetic wave shielding film adhered to the tape was confirmed by visual observation. The evaluation criteria are as follows:

A: The electromagnetic wave shielding film did not adhere to the tape.
B: While a slight amount of the electromagnetic wave shielding film adhered to the tape, a peeling to a degree that affects the external appearance of the electromagnetic wave shielding film was not observed.
C: The electromagnetic wave shielding film adhered to the tape, and as a result, the chipping of the electromagnetic wave shielding film was observed in a scattered manner.
D: A number of regions in the electromagnetic wave shielding film peeled off, but the amount of the film peeled off was less than half.
E: More than half of the electromagnetic wave shielding film peeled off.

< Surface Resistivity >

The surface resistivity was measured for each electromagnetic wave shielding film whose adhesion was evaluated as sufficient, and in which "Urethane A", "Urethane B", "Urethane C", "Styrene-acrylic A", "Styrene-acrylic B" or "Acrylic D" was used as a binder, using an apparatus composed of a four-point probe with a probe interval of 10 mm, and a resistivity meter, Milliohm HiTester 3227 (manufactured by Hioki E.E. Corporation).

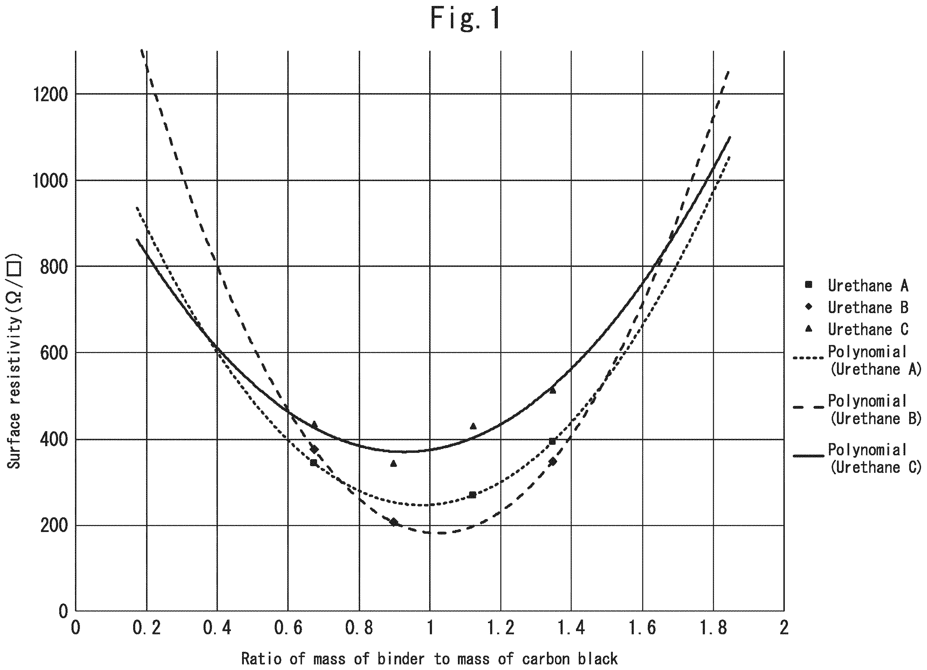

The configurations and the evaluation results of Examples and Comparative Examples are shown in Tables 1 to 4 and FIG. 1.

[Table 1]

Table 1

| | | | Example 1 | Example 2 | Comparative Example 1 | Example 3 | Example 4 | Comparative Example 2 | Example 5 | Example 6 | Example 7 | Comparative Example 3 |
|---|---|---|---|---|---|---|---|---|---|---|---|---|
| Contents of Respective Components | CB | Content | 7.80 | 7.80 | 7.80 | 7.80 | 7.80 | 7.80 | 7.80 | 7.80 | 7.80 | 7.80 |
| | Binder | Type | Urethane A | Urethane A | Urethane A | Urethane B | Urethane B | Urethane B | Urethane C | Urethane C | Urethane C | Urethane C |
| | | Content | 5.25 | 8.75 | 10.50 | 5.25 | 7.00 | 10.50 | 5.25 | 7.00 | 8.75 | 10.50 |
| | Dispersant | Type | SA | SA | SA | SA | SA | SA | SA | SA | SA | SA |
| | | Content | 1.56 | 1.56 | 1.56 | 1.56 | 1.56 | 1.56 | 1.56 | 1.56 | 1.56 | 1.56 |
| | Surfactant | Content | 1.00 | 1.00 | 1.00 | 1.00 | 1.00 | 1.00 | 1.00 | 1.00 | 1.00 | 1.00 |
| | Base | Type | AMP | AMP | AMP | AMP | AMP | AMP | AMP | AMP | AMP | AMP |
| | | Content | 0.78 | 0.78 | 0.78 | 0.78 | 0.78 | 0.78 | 0.78 | 0.78 | 0.78 | 0.78 |
| | | Type | TEA | TEA | TEA | TEA | TEA | TEA | TEA | TEA | TEA | TEA |
| | | Content | 1.00 | 1.00 | 1.00 | 1.00 | 1.00 | 1.00 | 1.00 | 1.00 | 1.00 | 1.00 |
| | Antiseptic | Content | 0.10 | 0.10 | 0.10 | 0.10 | 0.10 | 0.10 | 0.10 | 0.10 | 0.10 | 0.10 |
| | Water | Content | 82.51 | 79.01 | 77.26 | 82.51 | 80.76 | 77.26 | 82.51 | 80.76 | 79.01 | 77.26 |
| | Mass of Binder/Mass of CB | | 0.67 | 1.12 | 1.35 | 0.67 | 0.90 | 1.35 | 0.67 | 0.90 | 1.12 | 1.35 |
| | D/P | | 0.2 | 0.2 | 0.2 | 0.2 | 0.2 | 0.2 | 0.2 | 0.2 | 0.2 | 0.2 |
| Evaluation Results | Repellence | | A | A | A | A | A | A | B | A | A | A |
| | Adhesion | | A | A | A | A | A | A | A | A | A | A |
| | Surface Resistivity ($\Omega/\square$) | | 346 | 270 | 394 | 377 | 207 | 349 | 436 | 344 | 431 | 513 |

[Table 2]

Table. 2

| | | | Comparative Example 4 | Comparative Example 5 | Comparative Example 6 | Comparative Example 7 | Comparative Example 8 |
|---|---|---|---|---|---|---|---|
| Contents of Respective Components | CB | Content | 7.80 | 7.80 | 7.80 | 7.80 | 7.80 |
| | Binder | Type | Styrene ac-rylic A | Styrene ac-rylic A | Styrene ac-rylic A | Styrene ac-rylic A | Styrene ac-rylic B |
| | | Content | 6.00 | 9.00 | 12.00 | 18.00 | 5.40 |
| | Dispersant | Type | SA | SA | SA | SA | SA |
| | | Content | 1.56 | 1.56 | 1.56 | 1.56 | 1.56 |
| | Surfactant | Content | 1.00 | 1.00 | 1.00 | 1.00 | 1.00 |
| | Base | Type | AMP | AMP | AMP | AMP | AMP |
| | | Content | 0.78 | 0.78 | 0.78 | 0.78 | 0.78 |
| | | Type | TEA | TEA | TEA | TEA | TEA |
| | | Content | 1.00 | 1.00 | 1.00 | 1.00 | 1.00 |
| | Antiseptic | Content | 0.10 | 0.10 | 0.10 | 0.10 | 0.10 |
| | Water | Content | 81.76 | 78.76 | 75.76 | 69.76 | 82.36 |
| | Mass of Binder/Mass of CB | | 0.77 | 1.15 | 1.54 | 2.31 | 0.69 |
| | D/P | | 0.2 | 0.2 | 0.2 | 0.2 | 0.2 |
| Evaluation Results | Repellence | | A | A | A | A | A |
| | Adhesion | | E | E | B | A | C |
| | Surface Resistivity ($\Omega/\square$) | | 790 | 707 | 426 | 1220 | 2320 |

[Table 3]

Table 3

| | | | Comparative Example 9 | Comparative Example 10 | Comparative Example 11 | Comparative Example 12 | Comparative Example 13 | Comparative Example 14 | Comparative Example 15 |
|---|---|---|---|---|---|---|---|---|---|
| Contents of Respective Components | CB | Content | 7.80 | 7.80 | 7.80 | 7.80 | 7.80 | 7.80 | 7.80 |
| | Binder | Type | Acrylic A | Acrylic B | Acrylic C | Acrylic D | Acrylic D | Acrylic D | Acrylic D |
| | | Content | 4.80 | 4.14 | 4.55 | 4.95 | 9.90 | 12.38 | 14.85 |
| | Dispersant | Type | SA | SA | SA | SA | SA | SA | SA |
| | | Content | 1.56 | 1.56 | 1.56 | 1.56 | 1.56 | 1.56 | 1.56 |
| | Surfactant | Content | 1.00 | 1.00 | 1.00 | 1.00 | 1.00 | 1.00 | 1.00 |
| | Base | Type | AMP | AMP | AMP | AMP | AMP | AMP | AMP |
| | | Content | 0.78 | 0.78 | 0.78 | 0.78 | 0.78 | 0.78 | 0.78 |
| | | Type | TEA | TEA | TEA | TEA | TEA | TEA | TEA |
| | | Content | 1.00 | 1.00 | 1.00 | 1.00 | 1.00 | 1.00 | 1.00 |
| | Antiseptic | Content | 0.10 | 0.10 | 0.10 | 0.10 | 0.10 | 0.10 | 0.10 |
| | Water | Content | 82.96 | 83.62 | 83.21 | 82.81 | 77.86 | 75.385 | 72.91 |
| | Mass of Binder/Mass of CB | | 0.62 | 0.53 | 0.58 | 0.63 | 1.27 | 1.59 | 1.90 |
| | D/P | | 0.2 | 0.2 | 0.2 | 0.2 | 0.2 | 0.2 | 0.2 |
| Evaluation Results | Repellence | | A | A | A | C | A | A | A |
| | Adhesion | | E | E | E | E | A | A | B |
| | Surface Resistivity ($\Omega/\square$) | | 3160 | 463 | 541 | 722 | 558 | 833 | 1290 |

[Table 4]

[Table 4]

Table 4

| | | | Comparative Example 16 | Comparative Example 17 | Comparative Example 18 | Comparative Example 19 | Comparative Example 20 | Comparative Example 21 | Comparative Example 22 | Comparative Example 23 | Comparative Example 24 |
|---|---|---|---|---|---|---|---|---|---|---|---|
| Contents of Respective Components | CB | Content | 7.80 | 7.80 | 7.80 | 7.80 | 7.80 | 7.80 | 7.80 | 7.80 | 7.80 |
| | Binder | Type | Acrylic E | Acrylic E | Acrylic E | Acrylic E | Acrylic F | Acrylic G | Acrylic H | Acrylic I | Acrylic J |
| | | Content | 3.80 | 3.80 | 3.80 | 3.80 | 4.50 | 4.80 | 4.50 | 10.00 | 5.10 |
| | Dispersant | Type | SA | SA | SA | SA | SA | SA | SA | SA | SA |
| | | Content | 1.56 | 1.56 | 1.56 | 1.56 | 1.56 | 1.56 | 1.56 | 1.56 | 1.56 |
| | Surfactant | Content | 1.00 | 1.00 | 1.00 | 1.00 | 1.00 | 1.00 | 1.00 | 1.00 | 1.00 |
| | Base | Type | AMP | AMP | AMP | AMP | AMP | AMP | AMP | AMP | AMP |
| | | Content | 0.78 | 0.78 | 0.78 | 0.78 | 0.78 | 0.78 | 0.78 | 0.78 | 0.78 |
| | | Type | TEA | TEA | TEA | TEA | TEA | TEA | TEA | TEA | TEA |
| | | Content | 1.00 | 1.00 | 1.00 | 1.00 | 1.00 | 1.00 | 1.00 | 1.00 | 1.00 |
| | Antiseptic | Content | 0.10 | 0.10 | 0.10 | 0.10 | 0.10 | 0.10 | 0.10 | 0.10 | 0.10 |
| | Water | Content | 83.96 | 83.96 | 83.96 | 83.96 | 83.26 | 82.96 | 83.26 | 77.76 | 82.66 |
| | Mass of Binder/Mass of CB | | 0.49 | 0.49 | 0.49 | 0.49 | 0.58 | 0.62 | 0.58 | 1.28 | 0.65 |
| | D/P | | 0.2 | 0.2 | 0.2 | 0.2 | 0.2 | 0.2 | 0.2 | 0.2 | 0.2 |
| Evaluation Results | Repellence | | A | A | A | A | A | A | A | A | A |
| | Adhesion | | E | D | E | D | D | E | E | E | E |
| | Surface Resistivity (Ω/□) | | 869 | 674 | 528 | 840 | 715 | 2870 | 432 | 403 | 518 |

Satisfactory results were not obtained, at least in the evaluation of adhesion, for the electromagnetic wave shielding films obtained from a water-based dispersion in which a binder other than "Urethane A", "Urethane B", "Urethane C", "Styrene-acrylic A", "Styrene-acrylic B" and "Acrylic D" was used.

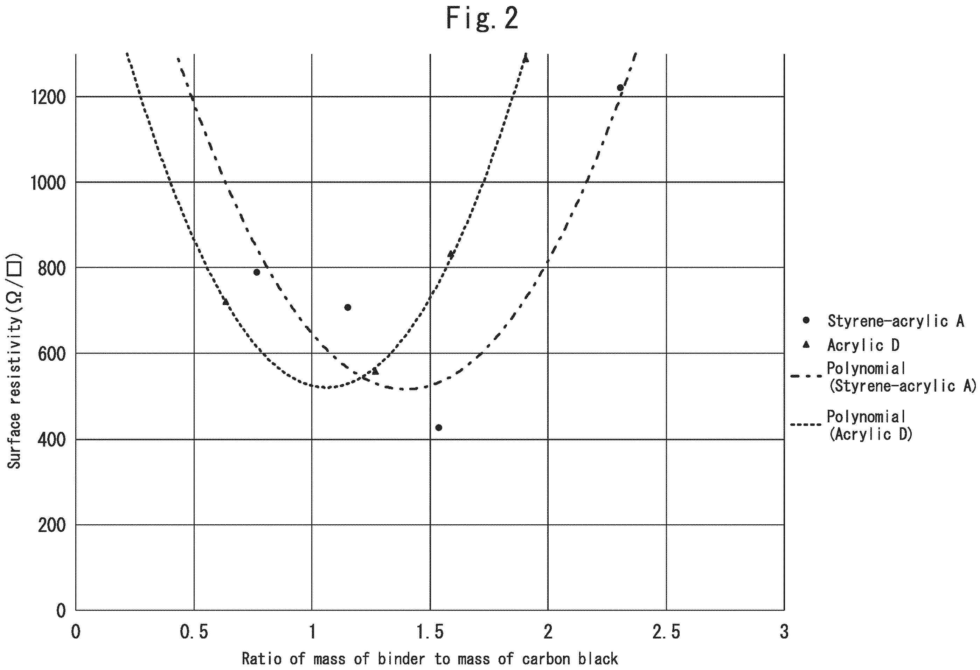

Further, the measured results were plotted for the cases where "Urethane A", "Urethane B" or "Urethane C" was used, with the ratio of the mass of the binder to the mass of the carbon black on the horizontal axis and the surface resistivity on the vertical axis, and quadratic approximation curves obtained from these plots are shown in FIG. 1. The quadratic approximation curves were prepared in the same manner, also for the cases where "Styrene-acrylic A" or "Acrylic D" was used, and the thus prepared curves are shown in FIG. 2.

It can be understood from FIG. 1 that, when "Urethane A", "Urethane B" or "Urethane C" is used, a low surface resistivity value is obtained while providing a good adhesion, within the range where the ratio of the mass of the particles in the urethane dispersion to the mass of the carbon black is relatively low, specifically, within the range of from 0.55 to 1.30, and particularly, that the minimum value of the surface resistivity is obtained within the range of from 0.85 to 1.15.

<< Evaluation in the Case of Using Gelling Agent >>

**< Example 1' >**

The water-based dispersion for electromagnetic wave shielding film formation of Example 1 described above was coated on the entire surface of a polyethylene terephthalate film having a size of 10 cm × 10 cm, using an applicator, with the value of the WET film thickness set to 80 μm. Subsequently, the coated water-based dispersion for electromagnetic wave shielding film formation was dried, to obtain an electromagnetic wave absorbing sheet having an electromagnetic wave shielding film. The electromagnetic wave shielding film obtained in the same manner as in Example 1 except for changing the set value of the WET film thickness to 80 μm, is shown in Table 5 as the shielding film of **Example 1'.** Subsequently, the actual value of the DRY film thickness of the resulting electromagnetic wave shielding film was measured.

The DRY film thickness was measured using a stylus-type surface profile measuring device (Dektak, manufactured by Bruker Corporation). Further, the theoretical value of the DRY film thickness was calculated by multiplying the set value of the WET film thickness by the content of solid content, namely the total content of CB, the binder, and the dispersant.

< Example 8 >

The water-based dispersion for electromagnetic wave shielding film formation and the electromagnetic wave shielding film of Example 8 were prepared in the same manner as in Example 1, except that the types and the contents of the respective components were changed as shown in Table 5. An alkali-swellable associative gelling agent (PRIMAL TT-935, solid content: 5%; manufactured by Rohm and Haas Japan K.K.) was used as the gelling agent. Details of other substances are the same as those in Tables 1 to 4. Subsequently, the actual value and the theoretical value of the DRY film thickness of the electromagnetic wave shielding film were determined in **the same manner as in Example 1'.**

**< Examples 1'A, 1'B, 1'C, 8A, 8B and 8C >**

Electromagnetic wave shielding films obtained in the same manner as in **Examples 1' and 8,** except that the coating distances of the water-based dispersions for electromagnetic wave shielding film formation were further increased, were defined as the shielding films of Examples 1'**A and** 8A, respectively. Specifically, each water-based dispersion for electromagnetic wave shielding film formation was coated for 20 m, using a comma coater, and with the value of the WET film thickness set to 80 μm.

Further, electromagnetic wave shielding films **obtained in the same manner as in Example 1', 8, 1'A and 8A,** except that the set values of the WET film thickness were changed to 160 μm, were defined as the shielding films of **Examples 1'B, 8B, 1'C and 8C, respectively.**

Subsequently, the actual value and the theoretical value of the DRY film thickness of each electromagnetic wave shielding film were determined in the same manner as in **Example 1' or 8.**

<< Evaluation >>

In addition to the evaluations of the repellence, adhesion and surface resistivity as described above, the volume resistivity of each of these electromagnetic wave shielding films thus obtained was calculated, in accordance with the following equation.

$$\text{Volume resistivity } (\Omega\cdot\text{cm}) = \text{surface resistivity } (\Omega/\square) \times \text{DRY film thickness } (\mu\text{m}) \times 10^{-4}$$

The configurations and the evaluation results of Examples 1', **1'A, 1'B, 1'C, 8A, 8B and 8C** are shown in Table 5.

[Table 5]

Table 5

| Configuration | | | Example 1' | Example 8 | Example 1'A | Example 8A | Example 1'B | Example 8B | Example 1'C | Example 8C |
|---|---|---|---|---|---|---|---|---|---|---|
| | CB | Content | 7.80 | 7.80 | 7.80 | 7.80 | 7.80 | 7.80 | 7.80 | 7.80 |
| | Binder | Type | Urethane A | Urethane A | Urethane A | Urethane A | Urethane A | Urethane A | Urethane A | Urethane A |
| | | Content | 5.25 | 5.25 | 5.25 | 5.25 | 5.25 | 5.25 | 5.25 | 5.25 |
| | Dispersant | Type | SA | SA | SA | SA | SA | SA | SA | SA |
| | | Content | 1.56 | 1.56 | 1.56 | 1.56 | 1.56 | 1.56 | 1.56 | 1.56 |
| | Gelling agent | Content | | 0.13 | | 0.13 | | 0.13 | | 0.13 |
| | Surfactant | Content | 1.00 | 1.00 | 1.00 | 1.00 | 1.00 | 1.00 | 1.00 | 1.00 |
| | Base | Type | AMP | AMP | AMP | AMP | AMP | AMP | AMP | AMP |
| | | Content | 0.78 | 0.78 | 0.78 | 0.78 | 0.78 | 0.78 | 0.78 | 0.78 |
| | | Type | TEA | TEA | TEA | TEA | TEA | TEA | TEA | TEA |
| | | Content | 1.00 | 1.00 | 1.00 | 1.00 | 1.00 | 1.00 | 1.00 | 1.00 |
| | Antiseptic | Content | 0.10 | 0.10 | 0.10 | 0.10 | 0.10 | 0.10 | 0.10 | 0.10 |
| | Water | Content | 82.51 | 82.38 | 82.51 | 82.38 | 82.51 | 82.38 | 82.51 | 82.38 |
| | Mass of Binder/Mass of CB | | 0.67 | 0.67 | 0.67 | 0.67 | 0.67 | 0.67 | 0.67 | 0.67 |
| | D/P | | 0.2 | 0.2 | 0.2 | 0.2 | 0.2 | 0.2 | 0.2 | 0.2 |
| | Coating Distance (m) | | 1 | 1 | 20 | 20 | 1 | 1 | 20 | 20 |
| | Set Value of WET film thickness ($\mu$m) | | 80 | 80 | 80 | 80 | 160 | 160 | 160 | 160 |
| | DRY Film Thickness ($\mu$m) | Theoretical Value | 11.7 | 11.8 | 11.7 | 11.8 | 23.4 | 23.6 | 23.4 | 23.6 |
| | | Actual Value | 10.3 | 12.1 | 4.1 | 12.5 | 17.7 | 23.9 | 4.6 | 23.6 |

(continued)

| | | Example 1' | Example 8 | Example 1'A | Example 8A | Example 1'B | Example 8B | Example 1'C | Example 8C |
|---|---|---|---|---|---|---|---|---|---|
| Evaluation Results | Repellence | A | A | A | A | A | A | A | A |
| | Adhesion | A | A | A | A | A | A | A | A |
| | Surface Resistivity ($\Omega/\square$) | 218 | 172 | 557 | 159 | 128 | 90 | 496 | 89 |
| | Volume Resistivity ($\Omega\cdot$cm) | 0.22 | 0.21 | 0.23 | 0.20 | 0.23 | 0.22 | 0.23 | 0.21 |

It can be understood from Table 5 that the electromagnetic wave shielding film of Example 8 obtained from a water-based dispersion containing a gelling agent has the same performance as the film **of Example 1'** obtained from a water-based dispersion which does not contain a gelling agent, when the coating distance is short.

When the coating distance is long and/or the set value of the WET thickness is high, on the other hand, it can be understood that electromagnetic wave shielding films having the same performance as the film of **Example 1'** obtained from a water-based dispersion which does not contain a gelling agent, and at the same time, having a DRY film thickness closer to the theoretical value as compared **to Example 1'A, 1'B and 1'C, respectively,** are obtained in Examples 8A, 8B and 8C.

**Claims**

1. A water-based dispersion for electromagnetic wave shielding film formation, the water-based dispersion comprising:

   water;
   carbon black; and
   a urethane dispersion,
   wherein the ratio of the mass of particles in the urethane dispersion to the mass of the carbon black is from 0.55 to 1.30.

2. The water-based dispersion according to Claim 1, wherein the ratio of the mass of the particles in the urethane dispersion to the mass of the carbon black is from 0.85 to 1.15.

3. The water-based dispersion according to Claim 1 or 2, wherein the particles in the urethane dispersion have an average particle diameter, as measured by the laser diffraction method, of 50 nm or less.

4. The water-based dispersion according to Claim 1 or 2, wherein the water-based dispersion further comprises a volatile base, and wherein the content of the volatile base is from 0.1 to 3.0% by mass.

5. The water-based dispersion according to Claim 1 or 2, wherein the water-based dispersion further comprises a gelling agent.

6. The water-based dispersion according to Claim 5, wherein the gelling agent is an alkali-swellable associative gelling agent.

7. The water-based dispersion according to Claim 1 or 2, wherein the carbon black has a hollow shell-like structure, and has a BET specific surface area, as measured by the nitrogen adsorption method, of 1,000 $m^2$/ g or less.

8. A method of producing an electromagnetic wave absorbing sheet, the method comprising coating the water-based dispersion according to Claim 1 or 2 on a resin substrate, and drying the coated dispersion to obtain an electromagnetic wave shielding film.

9. The method according to Claim 8, wherein the electromagnetic wave shielding film has a surface resistivity, as measured by the four-point probe method, of 400 Ω/□ **or less.**

10. An electromagnetic wave absorbing sheet comprising:

    a resin substrate; and
    an electromagnetic wave shielding film provided on the resin substrate,
    wherein the electromagnetic wave shielding film is an electromagnetic wave shielding film obtained by drying the water-based dispersion according to Claim 1 or 2.

11. The electromagnetic wave absorbing sheet according to Claim 10, wherein the electromagnetic wave shielding film has a dry film thickness of 100 μm or less, and a volume resistivity of 1.0 Ω·cm or less.

Fig. 1

EP 4 610 321 A1

Fig. 2

- Styrene-acrylic A
- Acrylic D
- Polynomial (Styrene-acrylic A)
- Polynomial (Acrylic D)

X-axis: Ratio of mass of binder to mass of carbon black

Y-axis: Surface resistivity (Ω/□)

EP 4 610 321 A1

## INTERNATIONAL SEARCH REPORT

| International application No. |
| --- |
| **PCT/JP2023/037474** |

| A. CLASSIFICATION OF SUBJECT MATTER |
| --- |
| ***C09D 175/04***(2006.01)i; ***C08K 3/04***(2006.01)i; ***C08L 75/04***(2006.01)i; ***C09D 5/02***(2006.01)i; ***C09D 5/33***(2006.01)i; ***C09D 7/61***(2018.01)i<br>FI: C09D175/04; C08K3/04; C08L75/04; C09D5/02; C09D5/33; C09D7/61 |
| According to International Patent Classification (IPC) or to both national classification and IPC |

| B. FIELDS SEARCHED |
| --- |
| Minimum documentation searched (classification system followed by classification symbols)<br>　　　C09D175/04; C08K3/04; C08L75/04; C09D5/02; C09D5/33; C09D7/61 |
| Documentation searched other than minimum documentation to the extent that such documents are included in the fields searched<br>　　　Published examined utility model applications of Japan 1922-1996<br>　　　Published unexamined utility model applications of Japan 1971-2023<br>　　　Registered utility model specifications of Japan 1996-2023<br>　　　Published registered utility model applications of Japan 1994-2023 |
| Electronic data base consulted during the international search (name of data base and, where practicable, search terms used) |

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2007-503299 A (BASF COATINGS AG) 22 February 2007 (2007-02-22)<br>　　　entire text, all drawings | 1-11 |
| A | JP 2-73512 A (DIAFOIL CO., LTD.) 13 March 1990 (1990-03-13)<br>　　　entire text, all drawings | 1-11 |
| A | JP 62-95342 A (TOYO TIRE & RUBBER CO., LTD.) 01 May 1987 (1987-05-01)<br>　　　entire text, all drawings | 1-11 |

☐ Further documents are listed in the continuation of Box C.　　☑ See patent family annex.

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search | Date of mailing of the international search report |
| --- | --- |
| **22 November 2023** | **05 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

### INTERNATIONAL SEARCH REPORT
**Information on patent family members**

International application No.

**PCT/JP2023/037474**

| Patent document cited in search report | | | Publication date (day/month/year) | Patent family member(s) | | | Publication date (day/month/year) |
|---|---|---|---|---|---|---|---|
| JP | 2007-503299 | A | 22 February 2007 | US | 2012/0034370 | A1 | |
| | | | | entire text, all drawings | | | |
| | | | | WO | 2005/021168 | A1 | |
| | | | | EP | 1658146 | A1 | |
| | | | | CN | 1842377 | A | |
| | | | | KR | 10-2006-0134906 | A | |
| JP | 2-73512 | A | 13 March 1990 | US | 5188891 | A | |
| | | | | entire text, all drawings | | | |
| | | | | KR | 10-1989-0010814 | A | |
| JP | 62-95342 | A | 01 May 1987 | (Family: none) | | | |

Form PCT/ISA/210 (patent family annex) (January 2015)

REFERENCES CITED IN THE DESCRIPTION

**Patent documents cited in the description**

- JP 2013168399 A
- JP 2017045782 A
- JP 2020111730 A
- JP 2015220233 A
- JP 2015172152 A
- JP 5930176 B